# FASCICULE DE BREVET EUROPEEN

(11) **EP 2 373 466 B1**
(45) Date de publication et mention de la délivrance du brevet: **16.05.2018**
(21) Numéro de dépôt: 09796763.2
(22) Date de dépôt: 30.11.2009
(51) Int. Cl.: B28B 1/00, C04B 40/02

(54) **PROCÉDÉ DE FABRICATION DE BLOC DE MATÉRIAU IMITANT LA PIERRE NATURELLE**
VERFAHREN ZUR HERSTELLUNG EINES MATERIALBLOCKS DER NATURSTEIN IMITIERT
PROCESS FOR MANUFACTURING A BLOCK OF MATERIAL THAT IMITATES NATURAL STONE

(30) Priorité: 19.12.2008 FR 0807178
(43) Date de publication de la demande: 12.10.2011
(73) Titulaire: Filali, Maussa, 67000 Strasbourg (FR)
(72) Inventeur: Filali, Maussa, 67000 Strasbourg (FR)
(74) Mandataire: Koelbel, Caroline
(86) Numéro de dépôt international: PCT/FR2009/001358
(87) Numéro de publication internationale: WO 2010/076404

(56) Documents cités:
- EP-A- 0 282 591
- EP-A- 0 445 301
- WO-A-00/01640
- WO-A-85/00587
- WO-A-94/27797
- DE-C- 578 389
- FR-A- 524 363
- GB-A- 1 603 405
- US-A- 2 348 614
- US-A- 3 417 172
- US-A- 5 637 412

## Description

### L'état de la technique antérieure

Le problème à résoudre est que les procédés de fabrication de bloc de matériau imitant la pierre naturelle utilisent au moins un liant chimique parmi le ciment, la chaux, le plâtre, différentes colles ou résines polymérisables ou encore différents acides réactifs.

Mais ces liants qui se retrouvent dans la composition finale du bloc de matériau n'existent pas dans la pierre naturelle d'origine imitée. Par exemple les procédés décrits dans les brevets FR 2 672 535 et FR 524 363 utilisent au moins l'un de ces liants permettant de fabriquer des pierres calcaires artificielles pour la construction, destinées à remplacer à bon marché des pierres ou briques en ciment à partir d'un mélange de sable et de scories avec de l'eau de chaux fraiche à l'état pâteux. L'eau de chaux est utilisée comme liant pour permettre la réalisation de briques par moulage puis séchage à l'air. La chaux est en effet connue pour réagir et durcir avec la carbonatation. L'eau de chaux est extraite à très haute température. De fait, sa production libère du gaz carbonique dans l'atmosphère responsable de l'effet de serre. Ces procédés ne sont pas écologiques.

Pour ces raisons, il est aisé pour un homme du métier de reconnaître l'authenticité d'une pierre naturelle taillée dans une carrière, d'un bloc de matériau reconstituée par ces procédés. L'imitation n'est pas satisfaisante.

La pierre naturelle le plus communément utilisé pour la construction est d'origine calcaire ou gréseuse, c'est une roche métamorphique. C'est à dire que c'est une roche sédimentaire provenant de la compaction, de la solubilisation, de la déformation, de la recristallisation et de la déshydratation de matériaux transportés sous forme de particules dissoutes ou en suspension dans l'eau. La formation du calcaire ou du grès se réalise sur des milliers d'années sous l'influence conjuguée de la pression, des variations de la température et de la solubilité à l'eau. Le calcaire est principalement formé de carbonate de calcium et de magnésium. Le gaz carbonique atmosphérique dissout dans l'eau de pluie s'infiltre dans les couches terrestres. Il réagit avec le carbonate de calcium ou de magnésium et forme le bicarbonate de calcium ou le magnésium, plus soluble dans l'eau. A sa recristallisation sous forme de carbonate, il scelle les grains de sable calcaires ou siliceux voisins pour former un bloc de pierre continu.

Ce processus complexe forme le liant endogène de la pierre naturelle.

Pour la construction noble, de maisons de maîtres ou d'édifices architecturaux, les matériaux utilisés sont des pierres naturelles taillées dans les carrières. Dans ce cas le problème à résoudre est que cette extraction nécessite l'emploi de moyens lourds de sciage et d'exploitation, avec de grandes pertes de matériaux. De plus, le transport, la manutention et la pose de ces pierres naturelles pour ce type de constructions nécessitent une main d'oeuvre qualifiée, à la fois rare et à la fois onéreuse.

La présente invention entend remédier à l'ensemble de ces désavantages. L'invention concerne un procédé de fabrication de matériau de construction, de la forme et de l'aspect d'une pierre naturelle taillée provenant d'une carrière. La particularité de cette invention est que non seulement elle reproduit l'aspect et l'apparence de la pierre naturelle imitée, mais aussi sa consistance et sa composition.

En effet, le procédé de la présente invention reproduit le procédé de la formation naturelle de la pierre par son principe de réaction, dans un temps suffisamment raccourci pour pouvoir être reproduit industriellement. Cette invention permet en cela de reproduire la pierre naturelle régionale en fonction de la provenance régionale du sable et des granulats de carrière.

Contrairement à d'autres méthodes, cette invention n'utilise pas de liants chimiques : ni ciment, ni chaux, ni plâtre, ni colle, ni résine. Cette invention n'utilise que le liant endogène pour reproduire la pierre naturelle taillée dans une carrière. La composition du bloc de matériau produit est exactement identique à la pierre naturelle imitée. Par exemple, il est possible de reproduire un bloc de matériau à partir de granulats perdus et de sable de la même carrière.

La présente invention ne nécessite pas de découpes, ni de manutention aux moyens lourds, ni l'intervention de main d'oeuvre qualifiée pour la pose. En effet cette invention concerne un bloc de construction modulaire qu'il est facile d'utiliser à l'aide d'un plan de construction.

Ainsi, cette invention permet de produire tout type de bloc pour la construction de maisons, d'édifices, de murs, de murets de clôture, d'abris de jardin, de bloc pour la réalisation de contours de fenêtres ou de contours de portes, de bloc pour les pavages de sol, des éléments de couverture pour la toiture et d'habillage des façades, des éléments de génie civil, bordures de trottoir, éléments de construction de ponts, traverses de chemin de fer, mais aussi des éléments de décoration intérieure, vasques de lavabo, éviers, bidets, cuvettes et baignoires et de décoration extérieure, statues ou monuments funéraires.

### Exposé de l'invention

La présente invention concerne le procédé de fabrication sous contrainte d'un bloc de matériau dans un moule fermé et le matériau produit.

Le procédé de fabrication d'un bloc de matériau pour la construction comprend les étapes suivantes:
- Mélanger des d'agrégats contenant du carbonate de calcium et/ou du carbonate de magnésium et de l'eau pour obtenir un mélange aqueux
- Transférer ce mélange aqueux dans un réacteur pressurisé hermétiquement fermé
- Introduire du gaz acide ou du gaz produit par le moyen d'un acide dans ledit réacteur pour former partiellement ou totalement du bicarbonate de calcium et/ou de magnésium en réaction avec ledit carbonate de calcium et/ou de magnésium contenu dans lesdits agrégats
- Transférer ledit produit de réaction dans un moule fermé comprenant un jeu de fuites et augmenter la pression d'écrasement dans le moule Pₑ pour atteindre une pression de défoisonnement P_{def} comprise entre environ 3 à 6MPa et chasser du moule le gaz et l'eau en excès par le jeu de fuites, poursuivre l'augmentation de la pression d'écrasement Pₑ au-dessus d'une valeur P_{fix} comprise entre environ 5 et 50 MPa pour provoquer une réaction d'échange moléculaire qui favorise la dissolution du carbonate de calcium et/ou de magnésium en présence de molécules d'hydrogénocarbonate, et poursuivre l'augmentation de la pression d'écrasement Pₑ jusqu'à obtenir une compacité maximale du mélange
- Dépressuriser progressivement le moule et extraire le bloc de matériau obtenu et
- Observer une période de séchage au cours de laquelle le bicarbonate de calcium et/ou de magnésium se recristallise en carbonate de calcium et/ou magnésium et forme le liant endogène entre les grains de sable provoquant la solidification du bloc de matériau obtenu.

### Exposé détaillé d'un mode de réalisation de l'invention

### Composition

La présente invention utilise les chutes et les rebus de découpe et de façonnage des blocs calcaires des carrières pour produire un bloc de matériau recomposé. Les carrières de matériaux calcaires produisent des pierres taillées aux dimensions voulues et les chauleries voisines produisent de la chaux par calcination à haute température. Dans ces deux activités les rébus sont des matériaux de la taille 0-30, c'est à dire qu'ils sont industriellement rejetés par un tamisage de 0 à 30 millimètres. Ainsi ces rébus se présentent grossièrement sous la forme de sable gros calcaire. Dans les chauleries voisines, la calcination du calcaire en chaux rejette également le dioxyde de carbone qu'il est facile de capter et de concentrer pour l'utiliser ultérieurement.

### Procédé

La présente invention utilise idéalement ce rebus de carrière de pierre calcaire et le gaz dioxyde de carbone rejeté par les chauleries dans le procédé qui est décrit par les étapes suivantes :
Pour la première étape, du sable calcaire, principalement composé de carbonate de calcium et/ou de carbonate de magnésium est mélangé à de l'eau.

### Variante Broyage

Ce mélange est introduit dans un système de broyage fin de façon à obtenir une poudre humide de grains, dont la taille moyenne est de l'ordre du micromètre, d'une façon générale inférieure au millimètre. Cette étape de broyage augmente la surface spécifique du sable calcaire carbonaté. En effet la somme des surfaces des grains en contact avec l'eau augmente au fur et à mesure des fissures et des cassures des grains de calcaire de façon à ce que la somme totale des surfaces des nouveaux grains plus petits mais plus nombreux augmente et favorise la réaction par contact avec l'eau et les espèces dissoutes. Cette étape n'est pas obligatoire pour réaliser le procédé selon l'invention mais améliore les qualités du bloc de matériau produit.

Par ailleurs, l'eau sert en plus à lubrifier le broyage des grains et à capter la poussière de broyage. Cette étape produit une pâte thixotrope homogène qu'il est possible de pomper industriellement vers un réacteur pressurisé.

### Réaction pressurisée

Pour la deuxième étape, la pâte thixotrope homogène calcaire est introduite dans une enceinte fermée ou un réacteur pressurisé hermétiquement fermé. Pour mieux contrôler et mieux comprendre son utilisation, le réacteur pressurisé comprend au moins une vanne d'entrée gaz et au moins une vanne de purge gaz, au moins un manomètre de contrôle de la pression P, au moins un mélangeur mécanique à pâle dont la vitesse de mixage Vmr est contrôlée, au moins un ph-mètre pour suivre le pH en solution et au moins un thermomètre de mesure de la température T.

Le réacteur pressurisé est de plus pourvu industriellement d'une entrée pour l'alimentation en matière solide, par exemple munie d'une pompe extrudeuse pour la pâte thixotrope homogène, d'une sortie vers le moule, par exemple munie d'une pompe extrudeuse haute pression et de différents conduits d'alimentation en charges, en additifs et produits de réactions.

Le gaz dioxyde de carbone CO₂, par exemple conditionné en réservoir à haute pression, est introduit par la vanne d'entrée à une pression supérieure à la pression nulle et se dissout dans l'eau selon les équations suivantes :
Dissolution du gaz carbonique dans l'eau :

   CO₂ + H₂O ⇔ H₂CO₃ (R₁)
Réaction acide de l'acide carbonique :

   H₂CO₃ + H₂O ⇔ H₃O⁺ + HCO₃⁻ (R₂)

La quantité de gaz carbonique dissout est fonction de la pression d'entrée du gaz Peg et de la quantité d'eau disponible. De préférence la pression Peg est supérieure à 4 bars et usuellement utilisée entre de 15 et 50 bars. L'augmentation de la pression du dioxyde de carbone CO₂ au-delà de 50 bars favorise la réaction (R₁) et le rendement total de la réaction globale (R₃) mais augmente considérablement le coût de l'installation.

Par exemple, dans l'étude du pH d'une solution de dioxyde de carbone dissout dans l'eau pure en fonction de la pression de dioxyde de carbone en équilibre, nous remarquons que le pH atteint 1 pour une pression Peg = 1 bar. Le pH diminue pour les pressions supérieures pour arriver à un pallier après 50 bars. Dès la pression de 1 bar, le pH est suffisant pour réaliser la réaction (R₁), mais à cette pression de 1 bar, le rendement de la réaction (R₃) durant un temps industriellement acceptable est insuffisant pour réaliser un bloc de matériau de bonne qualité. Au dessus de 50 bars, considérant les marges de sécurité et la température ambiante (0°C, +32°C), le matériel de production industrielle impose un surcoût important.

La quantité d'eau présente dans le réacteur est choisie comme la somme de la quantité d'eau nécessaire à la consommation de la réaction (R₁), plus la quantité d'eau nécessaire à maintenir une quantité suffisante de dioxyde de carbone dissout sous forme d'acide carbonique, disponible pour la réaction (R₃) plus la quantité d'eau nécessaire à la lubrification de la pâte thixotrope homogène.

La température de réaction (R₁) est supérieure à 0°C pour éviter la gélification de l'eau. La dissolution du gaz carbonique dans l'eau est améliorée à température basse. En revanche, la dissolution du calcaire, de même formule approximative que le carbonate métallique MCO₃, est plus aisée à température tiède. La température retenue de préférence est la température ambiante et au minimum 4°C.

L'acide carbonique étant corrosif, le broyeur, le réacteur et le moule sont fabriqués avec des les aciers aux propriétés améliorées par des traitements de résistance aux acides

### Variante broyeur dans le réacteur

Dans une variante du procédé selon la présente invention, le broyeur de sable calcaire se trouve dans le réacteur pressurisé de façon à réduire le nombre d'étapes de production, réduire la manipulation et la maintenance sur les machines de production. Un autre avantage de situer le broyeur de la première étape dans le réacteur pressurisé, est de mélanger plus intimement le sable calcaire broyé avec les additifs, particulièrement les oxydes métalliques.

Un désavantage connu de cette variante de procédé est qu'elle ne permet pas de distinguer le temps de broyage du temps de réaction dans la réacteur pressurisé. Il est difficile de modifier indépendamment la qualité de broyage du rendement de la réaction (R₁).

### Variante de concentration carbonique

Dans une variante du procédé selon l'invention, durant cette étape de réaction sous pression, le dioxyde de carbone peut être concentré sous sa forme hydratée : l'acide carbonique. Selon (R₁), le CO₂ dissout dans l'eau forme avec elle de l'acide carbonique H₂CO₃. Il est liposoluble. Il peut être concentré dans la phase lipidique dissoute ou en émulsion dans l'eau, par exemple un alcool dans l'eau. La solubilité du dioxyde de carbone en est fortement augmentée. Ce dioxyde de carbone concentré est disponible pour la réaction de surcarbonatation (Rₛ) même en dehors du réacteur pressurisé.

Dans une autre variante du procédé, une méthode similaire consiste à augmenter la quantité totale de dioxyde de carbone dissout en ajoutant à ce mélange du réacteur une base forte, par exemple KOH ou K₂CO₃ de telle manière que l'acide carbonique formé se transforme en hydrogénocarbonate de potassium KHCO₃ plus stable en solution, même dépressurisée. La quantité de base forte ajoutée est fonction de la pression de dioxyde de carbone dans le réacteur. Elle est ajoutée de telle sorte que le pH en solution dépressurisée reste compris dans le domaine de prédominance de l'hydrogénocarbonate de potassium entre 6,37 et 10,33 et de préférence au proche de 8,35

### Réaction de surcarbonatation

Selon le procédé de l'invention, le gaz carbonique dissout et concentré est consommé dans une réaction avec les carbonates métalliques selon les équations suivantes :
Action de l'acide carbonique :

MCO₃ + H₂CO₃ ⇔ M(HCO₃)₂ (R₃)

M est un élément alcalino-terreux ou un métal de transition, par exemple choisi parmi Ca, Mg, Fe, Al, Zn, Cu
M(HCO₃)₂ : hydrogénocarbonate métallique conjugué, encore appelé bicarbonate métallique

La réaction globale obtenue est résumée selon l'équation suivante, la réaction globale de surcarbonatation:

MCO₃ + H₂O + CO₂ ⇔ M(HCO₃)₂ (Surcarbonatation) (Rₛ)

Cette réaction correspond à la réaction de dissolution du carbonate métallique. Elle est réversible et équilibrée. L'augmentation de la pression Peg de gaz carbonique augmente la quantité de gaz carbonique dissout et la concentration d'acide carbonique en solution. Cette augmentation déplace l'équilibre de la réaction (Rₛ) vers la formation d'hydrogénocarbonate métallique. Il en résulte qu'une augmentation de la pression Peg du gaz dioxyde de carbone CO₂ dissout les carbonates métalliques. La réaction (Rₛ) correspond à la dissolution du carbonate métallique parce que l'acide carbonique le consomme. Elle produit l'hydrogénocarbonate métallique conjugué M(HCO₃)₂ dont la solubilité aqueuse est très grande, 80 fois supérieure à la solubilité des carbonates métalliques MCO₃ dans l'eau. Par exemple, une solution saturée d'hydrogénocarbonate métallique conjugué M(HCO₃)₂ contient une quantité massique d'hydrogénocarbonate métallique dissout supérieure à la quantité d'eau. Cette réaction globale de formation des hydrogénocarbonates métalliques est appelée la surcarbonatation. Le rendement de cette réaction (R₃) conditionne la qualité du bloc de matériau extrait en fin de processus.

### Variante de remplacement par un acide

Dans une variante de procédé selon l'invention appliqué à la formation d'un bloc de matériau comme décrit précédemment, la formation du gaz carbonique peut être obtenue par l'action d'un acide, par exemple de formule générale AH, sur le carbonate métallique. Dans ce cas l'acide introduit dans le réacteur pressurisé avec le mélange de sable calcaire broyé réagit avec le carbonate métallique pour former le dioxyde de carbone jusqu'à atteindre une pression Peg. Ce dioxyde de carbone dissout sous forme d'acide carbonique réagit avec un autre carbonate pour former l'hydrogénocarbonate métallique. Comme décrites ci-dessous les réactions (R₁) et (R₂) ont lieue selon les réactions suivantes :

AH + H₂O ⇒ H₃O⁺ + A⁻

2 H₃O⁺ + MCO₃ ⇒ H₂CO₃ + M²⁺ + 2 H₂O

M²⁺ + 2A⁻ ⇔ MA₂ (sel soluble)

AH + MCO₃ ⇔ M(HCO₃)A

2AH + 2MCO₃ ⇔ M (HCO₃)₂ + MA₂ (hydrogénocarbonate)

H₂CO₃ ⇔ H₂O + CO₂ (Dégagement gazeux)

H₂CO₃ + MCO₃ ⇔ M (HCO₃)₂ (hydrogénocarbonate)

Ainsi la dissolution du carbonate métallique sous l'action du dioxyde de carbone produit, a lieu de la même façon que décrite précédemment. La différence principale réside dans le contre ion A⁻ et les composés MA₂ et M(HCO₃)A qu'il forme par réaction et que l'on retrouve dans la composition finale du bloc de matériau.

Ainsi pour justifier l'utilisation d'un acide AH, il convient de vérifier que les sels produits existent bien dans la composition de la pierre naturelle imitée.

Par exemple, l'utilisation d'acide sulfurique conviendrait à l'utilisation dans la variante de procédé selon l'invention si la pierre naturelle imitée contient naturellement du sulfate de calcium hydraté, connu sous son nom de gypse. Dans un autre exemple, l'utilisation d'acide chlorhydrique conviendrait si la pierre imitée contenait du chlorure de calcium.

### Généralisation aux gaz acides

Dans une autre variante de procédé selon l'invention, le dioxyde de carbone aussi appelé l'anhydre carbonique peut être remplacé par un autre gaz acide faible. L'avantage du gaz acide faible tel que le dioxyde de carbone est la réversibilité de son action dans l'eau. En effet, l'action acide de la dissolution du dioxyde de carbone dans l'eau est inversée par le dégazage de la solution. Et la réaction de surcarbonatation (Rₛ) du dioxyde de carbone sur le carbonate métallique est aussi réversible. La présence du dioxyde de carbone disparaît du bilan global de réaction, exactement comme dans le processus naturel dit de pétrification. Le dioxyde de carbone joue le rôle de catalyseur dans le procédé selon l'invention.

D'autres gaz acides faibles peuvent ainsi jouer le rôle du dioxyde de carbone.

### Variante d'addition de charges

La pâte thixotrope calcaire ainsi surcarbonatée peut être mélangée à des charges dans le réacteur pressurisé. Ainsi la pâte thixotrope surcarbonatée est ajoutée à un mélange de charges parmi les granulats de sable siliceux et/ou calcaire, granulat luminescent, fibres végétales, fossiles calcaires marins, produits de recyclage ou encore de l'argile. L'ajout de charges a pour principal but de reproduire à l'identique la nature des pierres imitées.

Ainsi l'ajout de sable siliceux et d'argile dans le mélange permet d'imiter à la perfection les pierres gréseuses. Les agrégats calcaires et l'argile permettent d'imiter les pierres calcaires comme le marbre ou le travertin. Les sédiments marins calcaires comme les coquillages permettent d'imiter les pierres calcaires formées de fossiles marins. Les fibres végétales améliorent les qualités d'isolation du matériau et les produits de recyclage comme les fibres de polyéthylène permettent d'améliorer les qualités d'imperméabilisation du matériau. Des charges luminescentes, translucides comme le verre ou fluorescentes, par exemple absorbant la lumière de longueur d'onde comprise dans le domaine ultra violet pour le restituer dans le domaine visible permettent d'imiter une variété de cristaux particulièrement employée dans la décoration.

### Ajout d'additifs

La pâte thixotrope calcaire éventuellement additionnée de telles charges forme un mélange homogène dans le réacteur pressurisé. Ce mélange homogène, peut être additionné d'un mélange d'additifs tels que des colorants, des oxydes métalliques tels que l'oxyde de fer, l'oxyde de cuivre, l'oxyde de zinc et/ou l'oxyde d'aluminium, des agents durcissant comme des silicates métalliques, par exemple le silicate de potassium, des agents hydrophobes tels que l'ester de silice, les stéarates métalliques, les composés siloxanes ou siloxo-organiques ou des composés copolymères acryliques perfluorés et de l'eau, le tout en quantités rapportées déterminées. Ce dernier mélange forme la composition finale du bloc de matériau fabriqué.

Les oxydes métalliques apportent une grande spécificité aux blocs de matériaux qu'ils composent. Ils interviennent dans le schéma réactionnel selon la réaction : MO + 2H₂CO₃ ⇔ M(HCO₃)₂ + H₂O avec MO : oxyde métallique

Ils interagissent dans les réactions faisant intervenir l'élément M : (R₃), (Rₛ) (R₄) et (R₅). Ces oxydes métalliques existent dans la composition de la pierre naturelle. Ils apportent par exemple la coloration, la dureté et la spécificité des marbres naturels. L'emploi de ces oxydes correspond à l'imitation fidèle de la composition de la pierre naturelle.

Le silicate de potassium est soluble à l'eau et réagit avec le calcium, le magnésium ou les ions métalliques en, solutions selon la réaction :

K₂SiO₂ + Ca(HCO₃)₂ ⇒ CaSiO₂ + 2KHCO₃

ou

K₂SiO₂ + M(HCO₃)₂ ⇒ MSiO₂ + 2KHCO₃

avec

2KHCO₃ ⇔ K₂CO₃ + H₂O + CO₂

M est un élément alcalino-terreux ou un métal de transition, par exemple choisi parmi Ca, Mg, Fe, Al, Zn, Cu

Dans le cas de réaction avec l'ion métallique majoritaire le calcium, le silicate forme un cristal insoluble dans l'eau et dont le module de Young est très élevé. Cette caractéristique offre au mélange une dureté et une résistance à l'écrasement accrue.

L'ester de silice se polymérise en 180 jours au contact de l'eau. Il crée un réseau cristallin tridimensionnel, qui s'ajoute au réseau de carbonate de calcium ou de magnésium. Ce réseau tridimensionnel siliceux abondamment décrit dans la littérature publique apporte une résistance mécanique, une dureté et une imperméabilisation à l'eau exceptionnelles.

### Mise en forme dans le moule

La troisième étape du procédé selon l'invention est la formation du bloc de matériau dans le moule. Le mélange obtenu précédemment est introduit dans un moule fermé de forme correspondante à l'élément de construction à obtenir et soumis à une contrainte de pression imposée.

Dans le cadre d'un laboratoire d'essai, le moule présente au moins deux faces opposées amovibles. Après fermeture, le moule est présenté par ses faces amovibles sous la pression d'écrasement Pₑ d'une presse.

Dans le cadre d'une fabrication industrielle, la contrainte imposée peut être obtenue par la pression hydraulique Pₑ de la pompe extrudeuse haute pression du mélange granuleux homogène transféré du réacteur pressurisé vers le moule fermé.

Il est aussi possible d'utiliser une chambre hydraulique déformable, par exemple en caoutchouc, présente au centre du moule et qui sous une pression hydraulique, pneumatique ou mécanique extérieure Pₑ vient exercer une pression imposée du coeur du bloc de matériau vers les parois du moule. Un bloc de matériau réalisé par ce procédé présentera un coeur creux et des capacités d'isolation thermique et phonique remarquables.

Enfin il est aussi possible d'utiliser un système électrolytique qui produit une réaction dont l'expansion volumique, par cristallisation ou dilatation vient exercer une pression du coeur du bloc de matériau vers les parois du moule. Ce phénomène est particulièrement connu lors de cristallisations, qui sont des arrangements moléculaires tridimensionnels.

Le mélange granuleux est ainsi compressé de façon à obtenir la cohésion des grains de sable. Cette pression d'écrasement Pₑ atteint alors la pression de défoisonnement de valeur P_{def}, environ 3 à 6 MPa. Les gaz sont ainsi chassés du mélange et l'eau introduite dans la quantité optimale est uniformément répartie dans le volume laissé libre par les poudres solides du mélange. Un jeu de fuites permet au gaz dioxyde de carbone et à l'eau en excès de sortir du moule. Cependant cette décompression gazeuse est progressive et contrôlée par la taille du jeu de fuites du moule. Ainsi la pression exercée sur les fluides dans le moule au maximum de compression Pₑ est la pression atmosphérique.

### Réaction d'échange

En augmentant la pression d'écrasement Pₑ au-dessus de P_{def}, la contrainte d'écrasement est transmise aux grains solides qui s'écrasent les uns contre les autres.

En augmentant la pression d'écrasement Pₑ au-dessus d'une valeur de P_{fix} comprise entre environ 5 à 50 Mpa, dépendant de la taille des grains de sable calcaire et du degré de surcarbonatation, les grains de sable calcaire s'écrasent très fortement les uns contre les autres dans les trois directions spatiales. Les grains de sable calcaire glissent, s'usent et se déforment en s'aplatissant à une taille plus faible pour augmenter la surface spécifique d'échange avec l'eau et les espèces dissoutes, en particulier l'hydrogénocarbonate métallique. La compacité du matériau dans le moule augmente. A cette étape du procédé une réaction d'échange moléculaire est favorisée.
Réaction d'échange métallique :

MCO₃ + M'(HCO₃)₂ ⇔ M(HCO₃)₂ + M'CO₃ (R₄)

M et M' sont des éléments alcalino-terreux ou des métaux de transition choisis par exemple parmi :
Ca, Mg, Fe, Al, Zn, Cu
M CO₃ : carbonate métallique
M'(HCO₃)₂ : hydrogénocarbonate métallique d'échange
M(HCO₃)₂ : hydrogénocarbonate conjugué
M'CO₃ : carbonate associé

Cette réaction dite d'échange du carbonate métallique (R₄) se réalise plus facilement sous contrainte. En effet, le mélange de poudres écrasées dans le moule est constitué d'un ensemble de grains en contact les uns et les autres avec leurs plus proches voisins par de petites surfaces que nous appelons les surfaces de contact. Ces surfaces sont sous l'effet d'une force résiduelle de contrainte résultant de l'écrasement de l'ensemble des grains. Localement, ces tensions activent les sites à l'immédiate proximité des surfaces de contact. Les molécules de carbonate métalliques y sont sous l'effet d'une force qui favorise leur réaction de dissolution en présence de molécules d'hydrogénocarbonate, réagissant comme un acide selon la réaction d'échange (R₄).

Il en résulte une activation préférentielle de la réaction d'échange aux surfaces de contacts des grains sous l'action d'une contrainte. Cette réaction préférentielle aux surfaces de contact produit l'hydrogénocarbonate métallique conjugué M(HCO₃)₂ et le carbonate métallique associé M'CO₃ dans l'environnement spatial immédiat du point de contact. La surface de contact finit par s'éroder et s'aplatir de telle sorte à s'agrandir. Cette érosion partielle s'accompagne d'un transport des molécules hydrogénocarbonate conjugué M(HCO₃)₂ et de carbonate associé M'CO₃ dans les espaces proches restés inoccupés.

### Compacité maximale

La surface haute du moule, dite poinçon ou extracteur exerce une force transmise par la presse sur le mélange granuleux. Il est important de suivre la force de réaction de la masse de mélange granuleux, sous la contrainte initiale de pression Pₑ. En effet l'arrangement granulaire et surtout l'érosion aux surfaces de contact et le transport moléculaire local provoquent une décroissance de la force de réaction à la contrainte de pression Pₑ. Il en résulte une augmentation de la densité de la masse de poudre écrasée formant le matériau et une évacuation de l'eau nouvellement en excès par les fuites du moule.

Pour alimenter la réaction de dissolution des carbonates métalliques, l'augmentation de la pression de contrainte Pₑ réactive les sites de dissolution préférentielle sur les grains de sable jusqu'à en réduire les formes saillantes de contact inter-granulaire et ainsi réduire les espaces interstitiels. Au fur et à mesure de la réaction d'échange et de dissolution, la production d'hydrogénocarbonate métallique conjugué M(HCO₃)₂ et le carbonate métallique associé M'CO₃ comble les espaces inter-granulaires par la précipitation des carbonates métalliques dans les espaces où ils ne sont pas soumis à contrainte.

L'augmentation de la contrainte de pression d'écrasement Pₑ peut ainsi se poursuivre jusqu'à obtenir une compacité maximale du mélange de poudres à une densité dₘₐₓ.

### Stimulation électrolytique

Pour faciliter et accélérer cette réaction d'échange (R₄) et obtenir rapidement une compacité maximale, un générateur électrique utilisant la masse métallique du moule et une électrode métallique isolé du moule et plongée dans le bloc de matériau, y crée un champ électrolytique. L'électrode métallique plongée est perdue. Avantageusement elle peut être consommée par dissolution. Par exemple, l'électrode sous forme de fin grillage plié, plongée dans le matériau peut être en zinc. Le mélange pâteux sous l'action du gaz carbonique dissout et sous l'action d'une contrainte de compression imposée dans le moule, est soumis à une tension électrique U générant un courant d'intensité I et de fréquence f.

Si f = 0, le courant est dit continu. L'électrode plongée perdue est une anode, siège d'une oxydation et reliée à la borne positive du générateur. Dans ce cas, l'anode en zinc prise en exemple s'oxyde pour former l'oxyde de zinc.

Si f ≠ 0, le courant est alternatif. La réaction d'échange métallique (R₄) est activée. En effet cette réaction met en jeu de nombreuses espèces en solution : M^{2+,} CO₃²⁻ , HCO₃⁻, H⁺, OH⁻

M CO₃ + M'(HCO₃)₂ ⇔ M(HCO₃)₂ + M'CO₃ (R₄)

M et M' sont des éléments alcalino-terreux ou des métaux de transition choisis par exemple parmi :
Ca, Mg, Fe, Al, Zn, Cu
M CO₃ : carbonate métallique
M'(HCO₃)₂ : hydrogénocarbonate métallique
M(HCO₃)₂ : hydrogénocarbonate conjugué
M'CO₃ : carbonate associé de dissolution

La réaction d'échange métallique (R₄) se produit plus intensément sous l'influence forcée du courant alternatif sur les ions, atomes ou molécules chargées électriquement : M^{2+,} CO₃²⁻, HCO₃⁻, H⁺, OH⁻ mis en jeu dans la réaction d'échange. Ainsi l'influence d'un courant électrique a pour effet de favoriser la réaction d'échange métallique (R₄) et le transport local de molécules d'hydrogénocarbonate conjugué M(HCO₃)₂ et de carbonate associé M'CO₃. La fréquence f est déterminée par l'optimisation de la réaction d'échange métallique (R₄). Cette optimisation dépend de la taille du moule, de la forme et la nature de l'électrode, de la composition du bloc de matériau, de la quantité d'eau, de la température.

En pratique le générateur est d'abord utilisé sur le courant alternatif pour faciliter la réaction d'échange, puis en courant continu pour consommer l'électrode.

### Démoulage du bloc de matériau

La dernière étape, après la compacité maximale des poudres obtenue, est l'extraction du bloc de matériau. L'action du temps, de la température et du séchage induit la précipitation des carbonates métalliques associés et conjugués

M(HCO₃)₂ ⇔ MCO₃ + H₂O + CO₂ (R₅) (dégagement gazeux)

Cette réaction correspond à la prise du bloc de matériau.
M est un élément alcalino-terreux ou un métal de transition par exemple choisi parmi Ca, Mg, Fe, Al, Zn, Cu

La réaction (R₅) correspond à la réaction inverse de la réaction (R₃) qui la compense. Elle se produit dès la formation d'hydrogénocarbonate métallique, se poursuit à la sortie du réacteur pressurisé et s'accélère préférentiellement à partir du démoulage du bloc de matériau. Cette réaction est prédite par l'instabilité thermodynamique de l'hydrogénocarbonate métallique M(HCO₃)₂ qui se décompose en composé thermodynamiquement plus stable, le carbonate métallique M CO₃, en libérant du gaz carbonique CO₂ et de l'eau H₂O. Le carbonate métallique cristallise et forme un liant entre les grains de sables avec lesquels l'hydrogénocarbonate était en contact. Cette solidification correspond à la prise du bloc de matériau et ressemble en tout point à la solidification naturelle dite de pétrification naturelle.

La décomposition de l'hydrogénocarbonate métallique M(HCO₃)₂ est favorisée dans le temps et accélérée par la température T. En effet l'augmentation de température accélère le dégagement gazeux du dioxyde de carbone par un effet d'augmentation volumique fort (dilatation des gaz). Ainsi de petites poches de gaz carbonique grossissent, s'agglomèrent et s'infiltrent à travers le réseau poreux du bloc de matériau. Par ailleurs, il est connu dans la littérature que la solubilité du dioxyde de carbone décroît avec l'augmentation de la température et que le dioxyde de carbone est insoluble dans l'eau à une température supérieure à 80°C. Au séchage du bloc de matériau la diminution de la quantité d'eau, solvant du dioxyde de carbone force la libération du dioxyde de carbone.

La formation et la cristallisation du carbonate métallique M CO₃ forme l'élément liant du matériau à partir de l'hydrogénocarbonate métallique correspondant. Le déplacement des molécules d'hydrogénocarbonate M(HCO₃)₂ au moment de la réaction d'échange (R₄) et leur dissolution au voisinage proche des surfaces de contact des grains voisins augmentent la surface de cristallisation et de fixation des grains de sable entre eux.

Le carbonate métallique MCO₃ formé principalement de carbonate de calcium CaCO₃ se présente sous plusieurs formes cristallographiques. La calcite, forme cristalline la plus courante cristallise sous la forme rhomboédrique, et l'aragonite cristallise sous la forme orthorhombique alors que la forme vatérite présente une forme cristalline hexagonale. Le carbonate de calcium CaCO₃ précipite d'abord sous sa forme cristalline vatérite plus soluble à l'eau. Puis peu à peu, le carbonate métallique adopte sa forme définitive de calcite très peu soluble à l'eau. En conséquence, une période de cure de 28 jours est à observer. Par suite de la précipitation des carbonates, ce phénomène crée un « pont » cristallin entre deux ou plusieurs grains. Il s'agit du liant endogène.

Ainsi cette réaction reproduit à l'échelle de temps industriel la réaction naturelle métamorphique qui se déroule dans les couches terrestres en plusieurs milliers d'années, sous la pression des couches supérieures et à l'aide de dioxyde de carbone dissout dans l'eau. Il s'agit d'une réaction pseudo-métamorphique de dissolution, de déformation et de recristallisation sous contrainte. Le dioxyde de carbone consommé lors de la réaction est restitué en fin de cycle. Le dioxyde de carbone joue un rôle de catalyseur de réaction. Le liant est le carbonate de calcium, il est dit endogène.

Les différents additifs permettent de traiter le bloc de matériau à coeur dès la fabrication et de reproduire les caractéristiques particulières (aspect, couleur, granulométrie) au plus près des observations sur la pierre naturelle à imiter.

### Variante carbonatation de l'eau seule

Dans une variante du procédé selon l'invention, les poudres broyées calcaires additionnées des charges et des additifs comme décrites précédemment sont mélangées avec une fraction de l'eau de mélange et ensuite disposé directement dans le moule.

Ainsi le mélange de poudres qui se compose de sable calcaire broyé contenant du carbonate de calcium et/ou du carbonate de magnésium mélangé à des charges de granulats et de sable siliceux et/ou calcaire, additionné d'un mélange d'additifs tels que des colorants, des oxydes métalliques tels que l'oxyde de fer, l'oxyde de cuivre, l'oxyde de zinc et/ou l'oxyde d'aluminium, des agents durcissant comme des silicates métalliques, par exemple le silicate de potassium, des agents hydrophobes tels que l'ester de silice, les stéarates métalliques, les composés siloxanes ou siloxo-organiques ou des composés copolymères acryliques perfluorés et de l'eau est introduit dans le moule. Le moule est ensuite refermé et présenté sous la presse.

De l'eau est introduite dans le réacteur pressurisé, décrit précédemment. Le gaz dioxyde de carbone CO₂ ou un gaz contenant du dioxyde de carbone CO₂ est introduit par la vanne d'entrée à une pression supérieure à la pression nulle et se dissout dans l'eau. La quantité de gaz carbonique dissout est fonction de la pression d'entrée du gaz Peg et de la quantité d'eau disponible. De préférence la pression Peg est supérieure à 4 bars et usuellement utilisée entre de 15 et 50 bars.

A cette pression, une forte proportion de gaz carbonique est dissoute dans l'eau. Ce principe est connu dans l'industrie de la boisson gazeuse. Le gaz carbonique se dissout dans l'eau et réagit avec l'eau pour former l'acide carbonique. L'avancement de cette réaction conditionne la qualité du bloc de matériau extrait en fin de processus.

La température de réaction (R₁) est supérieure à 0°C pour éviter la gélification de l'eau. La dissolution du gaz carbonique dans l'eau est améliorée à température basse.
Dissolution du gaz carbonique dans l'eau :

   CO₂ + H₂O ⇔ H₂CO₃ (R₁)
Réaction acide de l'acide carbonique :

   H₂CO₃ + H₂O ⇔ H₃O⁺ + HCO₃⁻ (R₂)

Durant cette étape de réaction sous pression, le dioxyde de carbone peut être concentré sous sa forme hydratée l'acide carbonique. Selon (R₁), le CO₂ dissout dans l'eau forme avec elle de l'acide carbonique H₂CO₃. Il est liposoluble. Il peut être concentré dans la phase lipidique dissoute ou en émulsion dans l'eau, par exemple un alcool dissout dans l'eau. La solubilité du dioxyde de carbone en est fortement augmentée. Ce dioxyde de carbone concentré est disponible pour la réaction de surcarbonatation (Rₛ) même en dehors du réacteur pressurisé.

Une méthode similaire consiste à augmenter la quantité totale de dioxyde de carbone dissout en ajoutant à ce mélange du réacteur une base forte, par exemple KOH ou K₂CO₃ de telle manière que l'acide carbonique formé se transforme en hydrogénocarbonate de potassium KHCO₃ plus stable en solution, même dépressurisée. La quantité de base forte ajoutée est fonction de la pression de dioxyde de carbone dans le réacteur. Elle est ajoutée de telle sorte que le pH en solution, hors du réacteur, reste compris dans le domaine de prédominance de l'hydrogénocarbonate de potassium entre 6,37 et 10,33 et de préférence au proche de 8,35

Cet acide carbonique est introduit dans le moule à l'aide d'une pompe d'injection et vient en contact avec les poudres, réagit avec les carbonates métalliques pour former l'hydrogénocarbonate métallique associé selon les réactions décrites plus haut : (R₁) (R₂) et (R₃)

S'en suivent la compression et le démoulage comme décrits précédemment (R₄) et (R₅).

### Traitements post-formation

Le procédé selon la présente invention comprend plusieurs traitements possibles après la formation et l'extraction du bloc de matériau.

### - au silicate de potassium

Le traitement au silicate de potassium est le plus efficace à l'étape du démoulage. En effet le bloc de matériau contient une quantité significative de hydrogénocarbonate de calcium, très soluble en solution. Cet hydrogénocarbonate réagit très fortement avec le silicate de potassium pour former le silicate de calcium, molécule stable, insoluble et au pouvoir durcissant élevé.

K₂SiO₂ + Ca(HCO₃)₂ ⇒ CaSiO₂ + 2KHCO₃

2KHCO₃ ⇔ K₂CO₃ + H₂O + CO₂

Ce traitement est réalisé par aspersion cyclique de silicate de potassium, par ruissellement ou par immersion. Le silicate de potassium est disponible dans le commerce sous forme dissoute à environ 30% massique dans l'eau. Il pourra être utilisé sous cette forme ou dissout dans davantage d'eau.

Le silicate de sodium donne une réaction analogue mais forme de la même manière le carbonate de sodium qui cristallise en libérant d'importante aiguille blanches connues dans l'art du métier comme étant du salpêtre.

### - au lait de chaux

Autrefois en France, les pierres naturelles taillées dans les carrières étaient trempées dans un lait de chaux. Ce traitement après carbonatation dans l'air renforçait la couche superficielle de la pierre naturelle. Les tailleurs parlaient de recréer le calcin naturel de la pierre, formé par dissolution lente de matériau du coeur vers la surface extérieure de la pierre. De la même façon un traitement de protection au lait de chaux du bloc de matériau extrait du moule par notre procédé de fabrication est avantageux. Cet apport d'oxyde de calcium permet de fixer et de neutraliser la surface extérieure du bloc de matériau sous forme de carbonate de calcium CaCO₃. En effet, les réactions mises en jeu sont :

CaO + H₂O ⇒ Ca(OH)₂

CaO + CO₂ ⇒ CaCO₃

Ca(OH)₂ + CO₂ ⇒ CaCO₃ + H₂O

CaO + H₂CO₃ ⇒ CaCO₃ + H₂O

CaO + M(HCO₃)₂ ⇒ CaCO₃ + MCO₃ + H₂O

Ca(OH)₂ + M(HCO₃)₂ ⇒ CaCO₃ + MCO₃ + 2H₂O

Ce traitement est réalisé par aspersion cyclique de lait de chaux, par ruissellement ou par immersion. Idéalement, le lait de chaux utilisé provient d'une chaulerie, mais il peut aussi être obtenu par dissolution de 1 à 10 parties massiques de fleur de chaux pour 1 à 10 parties massiques d'eau. Il s'agit d'un traitement superficiel, le lait de chaux ne pénétrant que de quelques millimètres dans le bloc de matériau.

L'ensemble de ces réactions conduit à la formation de carbonate de calcium à la surface du bloc de matériau par la fixation du gaz carbonique sous ses formes CO₂, H₂CO₃ ou encore HCO₃⁻ dissout. Ce traitement nécessite un séchage et une cure de 28 jours.

### - à l'ester de silice

Un second traitement après la formation du bloc de matériau est le traitement par aspersion cyclique, par ruissellement ou par immersion d'une solution organique d'ester de silice. La solution organique d'ester de silice est préparée par dilution de 1 à 10 parties massiques d'ester éthylique de silice dans 1 à 100 parties massiques de solvant organique, par exemple l'éthanol, l'hexane ou le white-spirit.

Le traitement est double, il apporte une dureté et une imperméabilisation supplémentaire du bloc de matériau. La réaction est une polymérisation par hydrolyse partielle des fonctions éthoxyles. Ce traitement par une solution organique gagne rapidement les pores jusqu'au coeur du bloc de matériau. Ce traitement consolide le bloc de matériau pour des utilisations spécifiques, fondations, soubassements, revêtement de couverture, pavements de sol. Après séchage une durée de cure de 180 jours est nécessaire.

### - par hydrofugation

Un troisième traitement concerne l'hydrofugation superficielle du bloc de matériau pour promouvoir davantage ses qualités hydrophobes. Ce traitement est réalisé partir d'une solution en phase aqueuse ou organique, de composés siloxanes, siloxo-organiques ou de composés copolymères perfluorés, préparés en dissolvant selon les procédés connus dans l'art du métier de 1 à 15 parties massiques de matière active décrite ci-dessus dans 100 parties massiques d'eau ou de solvant organique, par exemple l'hexane. Le traitement par aspersion cyclique, par ruissellement ou par immersion pénètre de quelques millimètres dans les porosités du bloc de matériau. L'hydrofugation est efficace dès le séchage du bloc de matériau.

## Revendications

1. Procédé de fabrication d'un bloc de matériau pour la construction comprenant les étapes suivantes:
- Mélanger des agrégats contenant du carbonate de calcium et/ou du carbonate de magnésium et de l'eau pour obtenir un mélange aqueux,
- Transférer ce mélange aqueux dans un réacteur pressurisé hermétiquement fermé,
- Introduire du gaz acide ou du gaz produit par le moyen d'un acide dans ledit réacteur pour former partiellement ou totalement du bicarbonate de calcium et/ou de magnésium en réaction avec ledit carbonate de calcium et/ou de magnésium contenu dans lesdits agrégats,
- Transférer ledit produit de réaction dans un moule fermé comprenant un jeu de fuites et augmenter la pression d'écrasement dans le moule Pₑ pour atteindre une pression de défoisonnement P_{def} comprise entre environ 3 à 6MPa et chasser du moule le gaz et l'eau en excès par le jeu de fuites, poursuivre l'augmentation de la pression d'écrasement Pₑ au-dessus d'une valeur P_{fix} comprise entre environ 5 et 50 MPa pour provoquer une réaction d'échange moléculaire qui favorise la dissolution du carbonate de calcium et/ou de magnésium en présence de molécules d'hydrogénocarbonate, et poursuivre l'augmentation de la pression d'écrasement Pₑ jusqu'à obtenir une compacité maximale du mélange,
- Dépressuriser progressivement le moule et extraire le bloc de matériau obtenu, et
- Observer une période de séchage au cours de laquelle le bicarbonate de calcium et/ou de magnésium se recristallise en carbonate de calcium et/ou magnésium et forme le liant endogène entre les grains de sable provoquant la solidification du bloc de matériau obtenu.

2. Procédé selon la revendication 1, **caractérisé en ce que** le gaz acide est du gaz dioxyde de carbone ou du gaz contenant du dioxyde de carbone.

3. Procédé selon la revendication 1, **caractérisé en ce qu'**il comprend une étape préalable qui consiste à former le mélange aqueux à partir d'agrégats de sable ou de roche calcaire contenant du carbonate de calcium et/ou du carbonate de magnésium et de l'eau.

4. Procédé selon l'une quelconque des revendications précédentes, **caractérisé en ce que** l'addition du gaz acide se réalise d'abord partiellement ou totalement dans l'eau qui sert au mélange aqueux, sous ses formes dissoutes d'acide carbonique, de bicarbonate métallique, stabilisées ou non, par une base ou un mélange lipidique, avant d'être additionné au mélange aqueux.

5. Procédé selon l'une quelconque des revendications précédentes, **caractérisé en ce qu'**il comprend une étape qui consiste à broyer le mélange aqueux de façon à obtenir une poudre aqueuse de grains dont la taille moyenne est de l'ordre du micromètre, d'une façon générale inférieure au millimètre, ce broyage fin du mélange produisant une pâte thixotrope homogène et étant réalisé avant ou pendant la réaction pressurisée avec le gaz acide.

6. Procédé selon l'une quelconque des revendications précédentes, **caractérisé en ce qu'**il comprend une étape d'addition de charges audit mélange aqueux, lesdites charges étant sélectionnées parmi:
a) des agrégats, du sable siliceux et/ou de l'argile
b) des agrégats, du sable calcaire et/ou de l'argile,
c) des fibres végétales
d) des résidus sédiments calcaires marins
e) des charges luminescentes translucides ou fluorescentes
f) des produits de recyclage

7. Procédé selon l'une quelconque des revendications précédentes, **caractérisé en ce qu'**il comprend une étape d'addition d'additifs audit mélange aqueux, lesdits additifs étant sélectionnées parmi:
a) des colorants
b) des oxydes métalliques
c) des silicates métalliques
d) des agents hydrophobes

8. Procédé selon les revendications 6 ou 7, **caractérisé en ce que** l'addition des charges ou des additifs est réalisée avant l'étape de broyage fin et/ou pendant l'étape de réaction pressurisée avec le gaz et/ou avant le transfert dans le moule.

9. Procédé selon l'une des revendications précédentes, **caractérisé en ce qu'**il comprend une étape ultérieure au démoulage du bloc de matériau obtenu qui consiste en un traitement du bloc de matériau démoulé, réalisé successivement par l'une ou plusieurs des solutions parmi :
a) Une solution de silicate de potassium
b) Une solution de lait de chaux
c) Une solution d'ester de silice
d) Une solution de composés siloxanes, siloxo-organiques ou de composés polymères perfluorés.

10. Procédé selon l'une quelconque des revendications précédentes, **caractérisé en ce que**, pendant l'étape de compression dans le moule, on réalise une électrolyse utilisant la masse métallique du moule et une électrode métallique isolée du moule et plongée dans le bloc de matériau créant un champ électrolytique dans le moule.

## Patentansprüche

1. Verfahren zur Herstellung eines für den Bau bestimmten Materialblocks bestehend aus folgenden Schritten:
- Mischen der Kalziumkarbonat und/oder Magnesiumkarbonat enthaltenden Aggregaten und Wasser, um eine wässrige Mischung zu erhalten,
- Überführung dieser wässrigen Mischung in einen hermetisch geschlossenen Druckreaktor,
- Einleiten von Sauergas oder von mittels einer Säure produziertem Gas in besagten Reaktor, um durch Reaktion mit in besagten Aggregaten enthaltenem Kalzium und/oder Magnesiumkarbonat zum Teil oder in Gänze Kalzium und/oder Magnesiumbikarbonat zu bilden,
- Überführung von besagtem Reaktionsprodukt in eine geschlossene Form mit einem Satz Ableitungen und Erhöhen des Stauchdrucks Pₑ in der Form, um einen Entquellungsdruck P_{def} zwischen ca. 3 bis 6MPa zu erhalten und das überschüssige Gas und Wasser über den Satz Ableitungen aus der Form zu verdrängen, weitere Erhöhung des Stauchdrucks Pₑ über einen Wert P_{fix} zwischen ca. 5 und 50 MPA hinaus, um eine Molekularaustausch-Reaktion zu bewirken, die die Auflösung des Kalzium und/oder Magnesiumkarbonats in Anwesenheit von Hydrogenkarbonatmolekülen fördert, und weitere Erhöhung des Stauchdrucks Pₑ, bis eine maximale Kompaktheit der Mischung erhalten wird,
- Progressiver Druckabbau in der Form und Entformen des erhaltenen Materialblocks, und
- Einhalten einer Trocknungszeit, in der das Kalzium und/oder Magnesiumkarbonat wieder als Kalzium und/oder Magnesiumkarbonat kristallisiert und das endogene Bindemittel zwischen den Sandkörnern bildet, und somit die Verfestigung des erhaltenen Materialblocks bewirkt.

2. Verfahren nach Anspruch 1, **dadurch gekennzeichnet, dass** der Sauergas Kohlendioxid-Gas oder ein Kohlendioxid enthaltender Gas ist.

3. Verfahren nach Anspruch 1, **dadurch gekennzeichnet, dass** es einen vorhergehenden Schritt aufweist, in dem die wässrige Mischung aus Kalziumkarbonat und/oder Magnesiumkarbonat enthaltende Sand- oder Kalkstein-Aggregaten und Wasser gebildet wird.

4. Verfahren nach einem beliebigen der vorhergehenden Ansprüche, **dadurch gekennzeichnet, dass** die Einleitung des Sauergases zuerst zum Teil oder in Gänze in das für die wässrige Mischung bestimmte Wasser erfolgt, in seinen aufgelösten Formen als Kohlensäure, Metallbikarbonat, stabilisiert oder nicht durch eine Base oder ein Lipidgemisch, bevor dieses der wässrigen Mischung beigemischt wird.

5. Verfahren nach einem beliebigen der vorhergehenden Ansprüche, **dadurch gekennzeichnet, dass** es eine Schritt aufweist, im dem die wässrige Mischung gemahlen wird, um ein wässriges Pulver zu erhalten mit Körnern mit einer durchschnittlichen Größe in der Größenordnung des Mikrometers, im Allgemeinen unterhalb des Millimeters, wobei diese Feinmahlung der Mischung eine homogene thixotrope Paste erzeugt und vor oder während der Reaktion unter Druck mit dem Sauergas erfolgt.

6. Verfahren nach einem beliebigen der vorhergehenden Ansprüche, **dadurch gekennzeichnet, dass** es einen Schritt des Zusatzes von Füllstoffen in besagte wässrige Mischung aufweist, wobei besagte Füllstoffe gewählt werden unter:
a) Aggregaten, Quarzsand und/oder Ton
b) Aggregaten, Kalksand und/oder Ton
c) Pflanzenfasern
d) Resten von Meereskalksedimenten
e) durchscheinenden leuchtenden oder fluoreszierenden Füllstoffen
f) wiederverwerteten Produkten

7. Verfahren nach einem beliebigen der vorhergehenden Ansprüche, **dadurch gekennzeichnet, dass** es einen Schritt des Zusatzes von Zusatzstoffen in besagte wässrige Mischung aufweist, wobei besagte Zusatzstoffe gewählt werden unter:
a) Farbstoffen
b) Metalloxiden
c) Metallsilikaten
d) hydrophoben Stoffen

8. Verfahren nach Anspruch 6 oder 7, **dadurch gekennzeichnet, dass** der Zusatz der Füllstoffe oder der Zusatzstoffe vor dem Schritt der Feinmahlung und/oder während des Schritts der Reaktion unter Druck mit dem Gas und/oder vor der Überführung in die Form erfolgt.

9. Verfahren nach einem der vorhergehenden Ansprüche, **dadurch gekennzeichnet, dass** es einen nach dem Entformen des Materialblocks erfolgenden Schritt aufweist, in dem der entformte Materialblock einer Behandlung unterzogen wird, die aufeinanderfolgend mit einer oder mehreren der untenstehenden Lösungen erfolgt:
a) Eine Kaliumsilikat-Lösung
b) Eine Kalkmilch-Lösung
c) Eine Siliziumester-Lösung
d) Eine Lösung von Siloxan-, siloxo-organischen oder perfluorierten PolymerVerbindungen.

10. Verfahren nach einem beliebigen der vorhergehenden Ansprüche, **dadurch gekennzeichnet, dass** man, während des Schritts der Komprimierung in der Form, über die Metallmasse der Form und eine von der Form isolierte und in den Materialblock tauchende, in der Form ein elektrolytisches Feld erzeugende Elektrode, eine Elektrolyse durchführt.

## Claims

1. Process of manufacturing a block of material for construction comprising the following steps:
- mix aggregates containing calcium carbonate and/or magnesium carbonate and water to form an aqueous mixture,
- transfer the aqueous mixture in a pressurized, hermetically sealed reactor,
- introduce an acid gas or gas produced by means of an acid in said reactor in order to form in part or totally calcium and/or magnesium bicarbonate reacting with said calcium and/or magnesium carbonate contained in said aggregates,
- transfer said reaction product in a closed mold comprising a set of vents and increase the compression pressure Pₑ of the mold to reach the shrinkage pressure having a value P_{def}, comprised between about 3 to 6 MPa and allow the excess gas and water to get out of the mold through the set of vents, continue the increase of the compression pressure Pₑ above a value of P_{fix} comprised between about 5 to 50 Mpa in order to induce a molecular exchange reaction which favors dissolution of the calcium and/or magnesium carbonate in presence of hydrogencarbonate, and continue the increase of the compression pressure Pₑ until obtaining a maximum compactness of the mixture,
- depressurize progressively the mold and extract the block of material obtained, and;
- observe a curing period during which the calcium and/or magnesium bicarbonate crystallize in calcium and/or magnesium carbonate and create the endogenous binder between the grains to allow the solidification of said block of material obtained.

2. Process according to claim 1, **characterized in that** the acid gas is a carbon dioxide gas or gas containing carbon dioxide.

3. Process according to claim 1, **characterized in that** it includes a previous step that consists in forming the aqueous mixture from aggregates of sand or calcareous rock containing calcium carbonate and/or magnesium carbonate and water.

4. Process according to any one of the previous claims, **characterized in that** the addition of acid gas is carried out first partly or totally in the water used for the aqueous mixture, under its dissolved forms of carbonic acid, metallic bicarbonate, stabilized or not, by a base or a lipidic mix, before being added to the aqueous mixture.

5. Process according to any one of the previous claims, **characterized in that** it includes a step that consists in crushing the aqueous mixture in order to obtain an aqueous powder of grains with an average size of the order of the micrometer, generally smaller than one millimeter, this fine crushing of the mixture producing an homogeneous thixotropic paste, and being carried out before or during the pressurized reaction with the acid gas.

6. Process according to any one of the previous claims, **characterized in that** it includes a step of adding fillers to the aqueous mixture, said fillers being selected among:
a) aggregates, siliceous sand and/or clay,
b) aggregates, calcareous sand and/or clay,
c) vegetal fibers,
d) residues of calcareous marine sediments,
e) luminescent, translucent or fluorescent fillers,
f) recycled products.

7. Process according to any one of the previous claims, **characterized in that** it includes a step of adding additives to said aqueous mixture, said additives being selected among:
a) colorants,
b) metallic oxides,
c) metallic silicates,
d) hydrophobic agents.

8. Process according to claim 6 or 7, **characterized in that** the addition of fillers or additives may be carried out before the fine crushing step and/or during the step of pressurized reaction with the gas and/or before the transfer in the mold.

9. Process according to any one of the previous claims, **characterized in that** it includes a step after removing the block of material obtained that consists in treating the removed block of material, carried out successively by means of one or several of the solutions selected among:
a) a potassium silicate solution,
b) a milk of lime solution,
c) a silica ester solution,
d) a solution of siloxane, siloxo-organic compounds or perfluorinated copolymer compounds.

10. Process according to any one of the previous claims, **characterized in that**, during the compression step in the mold, one carries out an electrolysis using the metallic mass of the mold and a metallic electrode insulated from the mold and located in the block of material creating an electrolytic field in the mold.
